# EUROPEAN PATENT SPECIFICATION

(11) **EP 1 644 302 B1**
(45) Date of publication and mention of the grant of the patent: **22.11.2006**
(21) Application number: 03741656.7
(22) Date of filing: 27.06.2003
(51) Int. Cl.: C05G 1/00, C05G 5/00

(54) **PROCESS FOR THE PRODUCTION OF A FERTILIZER AND FERTILIZER**
VERFAHREN ZUR HERSTELLUNG EINES DÜNGEMITTELS UND DAS DÜNGEMITTEL
ENGRAIS ET PROCEDE DE PRODUCTION CORRESPONDANT

(43) Date of publication of application: 12.04.2006
(73) Proprietor: Melspring International B.V., 6811 AD Arnhem (NL)
(72) Inventor: EVERS, Maurice, Aloysius, Antonius, NL-6674 BZ Herveld (NL); TERLOUW, Anton, NL-6904 PV Zevenaar (NL)
(74) Representative: van Westenbrugge, Andries
(86) International application number: PCT/NL2003/000480
(87) International publication number: WO 2005/000770

(56) References cited:
- DE-A- 4 206 877
- DATABASE WPI Section Ch, Week 198327 Derwent Publications Ltd., London, GB; Class C04, AN 1983-703954 XP002270409 & SU 952 831 A (AS BELO PEAT INST), 23 August 1982 (1982-08-23)
- DATABASE WPI Section Ch, Week 199216 Derwent Publications Ltd., London, GB; Class A97, AN 1992-129890 XP002270410 & SU 1 661 180 A (DNEPR CHEM TECHN INST), 7 July 1991 (1991-07-07)
- DATABASE WPI Section Ch, Week 197807 Derwent Publications Ltd., London, GB; Class C04, AN 1978-12922A XP002270411 & JP 50 142367 A (DAINICHISEIKA COLOR & CHEM MFG), 17 November 1975 (1975-11-17)

## Description

### Field of invention

This invention is related to a process for the production of a fertilizer. The invention is also related to a fertilizer. Further, the invention is related to a process for the production of an organomineral fertilizer. The invention is also related to an organomineral fertilizer.

### Background of invention

Fertilizers, like mineral fertilizers, organic fertilizers and organonmineral fertilizers are known from the art and are widely used in agriculture. For example, WO 0206186 describes a method for the preparation of organic fertilizer (organomineral fertilizer) granules in which dried manure is mixed with urea and minerals and fed to a granulator. A disadvantage of this organomineral fertilizer is that the release of nitrogen (urea) and minerals is very fast. This means that a repeated fertilization with this organomineral fertilizer is necessary.

Hence, a slow-release of urea or other nutrients over e.g. weeks or months is desired. Slow-release of mineral fertilizers is known, e.g. from US 4789391. The most common method of modifying the fertilizer product to provide controlled nutrient release is to control the solubility of the fertilizer. In the case of urea, such products can be made by reacting urea with various aldehydes. Urea has also been reacted with formaldehyde resulting in a product that mainly consists of methylene urea polymers that vary in chain length and degree of cross-linlcing. Nitrogen is released from the insoluble portion of these materials by microbial degradation and therefore, factors such as soil moisture, temperature, pH, nutrient content and oxygen which influence the rate of microbial activity also effect the rate of nitrogen release. Urea takes part in the reaction to form urea formaldehydes.

Modification of the fertilizer product to control the amount of nutrient uptake can also be achieved by coating soluble fertilizers to adjust the nitrogen release. Coatings are generally classified in a number of types. There are semipermeable membranes which are broken down by internal osmotic water pressure built-up by vapour diffusion. Release of the nitrogen from the soluble fertilizer is usually complete once the coating is broken. Another type of coating involves the use of impermeable membranes with small pores. In this type of coating water passes through the coating and dissolves the fertilizer, causing swelling of the capsule and enlargement of the pores. The dissolved fertilizer then diffuses through the enlarged pores in the coating. Further, impermeable membranes without pores are utilised to coat soluble fertilizers. In this type of coating, chemical, physical or microbial action degrades the membrane material before fertilizer release occurs, and nutrient release is usually complete once the coating is degraded.

Some controlled release products use polymer coatings based on impermeable membranes with small pores to coat soluble fertilizers. Release of the nutrients can be varied by changing the thickness of the coating. Sulphur coated urea has also been used to provide a controlled release fertilizer. Nitrogen release is based upon the thickness and completeness of the sulphur coating, the soil moisture, and the soil temperature. Increased soil moisture and temperature accelerate the degradation of the impermeable sulphur coating and thus the diffusion of urea through the pores in the coating.

Controlled release of the fertilizer nutrients may also be accomplished through nitrification inhibitors. Nitrification is the process which converts ammonium ions, when applied to the soil as ammonia, by bacterial oxidation to nitrate ions. Certain materials inhibit nitrification because they are toxic to the soil bacteria that oxidise ammonium ions. For example, certain pesticides and chemicals are toxic to the bacteria that convert ammonium ions to nitrate. The inhibitors delay conversion of ammonium nitrogen to nitrate by specifically inhibiting the activity of the soil bacteria.

Mineral fertilizers can also be entrapped or coated. The use of lignosulfonate to make a coating or a kind of matrix to encase or entrap mineral fertilizers is known from US 4789391. This document describes a copolymerisation process wherein lignosulfonate and acrylonitrile are reacted. In a next process, the obtained copolymer is hydrolysed under basic conditions while evaporating an urea solution at elevated temperatures (about 140°C). The acrylonitrile group is essential, since this group can react to the desired polyacrylic acid-amide (PAA), leading to the formation of a matrix that entraps or encases urea. The process of US 4789391 is a complicated process leading to a product with an uncontrolled release or only a slow-release over a short period. Next to that, US 4789391 does not describe how slow-release organomineral fertilizers can be obtained. Further, the use of acrylonitrile might be less desired in view of environmental aspects.

### Summary of the invention

It is an object of the invention to provide an alternative process for the production of fertilizers, like mineral fertilizers, organic fertilizers and organonmineral fertilizers. It is further an object of the invention, to provide a process for the production of slow-release fertilizers or long-release fertilizers, which suffers less from above-mentioned process disadvantages. It is another object of the invention to provide fertilizers that release nitrogen over days to several months.

To this end, the invention provides a process for the production of a fertilizer, the process comprising intimately mixing urea and a lignin compound thereby providing a blend, and heating the blend.

In an embodiment of the process of the invention, there is provided a process for the production of an organomineral fertilizer, the process comprising: intimately mixing mineral fertilizer material, urea, a lignin compound and organic fertilizer material thereby providing a blend, and heating the blend.

In a specific embodiment, the invention provides a process for the production of an organomineral fertilizer, the process comprising:
a) blending mineral fertilizer material, urea, and organic fertilizer material;
b) blending a lignin compound with the fertilizer blend obtained at a);
c) warming and moistening the blend obtained at b);
d) heating the blend obtained at c).

In another aspect of the invention, there is provided a fertilizer, which is obtainable according to the process of the invention.

In a further aspect of the invention, there is provided an organomineral fertilizer comprising mineral fertilizer material, urea, organic fertilizer material and a lignin compound, that is obtainable according the process of the invention.

In a specific embodiment of the organomineral fertilizer of the invention, the organomineral fertilizer comprises 20-80 wt.% mineral fertilizer material, 2-40 wt.% urea, 20-80 wt.% organic fertilizer material and 0.5-5 wt.% of a lignin compound based on the total weight of the organomineral fertilizer.

### Brief description of drawings

Figure 1 shows different N-fractions in a soil (experiment 3).
Figure 2 shows the different N-fractions in the soil after treatment with conditioned chicken manure (standard organic fertilizer) (experiment 3).
Figure 3 shows the different N-fractions of the soil after treatment with an organomineral fertilizer according to an embodiment of the invention (experiment 3).
Figure 4 shows the different N-fractions of the soil after treatment with a standard NPK mineral fertilizer (experiment 3).
Figure 5 shows the different N-fractions after treatment with a slow-release mineral fertilizer (coated) (experiment 3).

### Description of invention

The invention is directed to a process for the production of a fertilizer, the process comprising intimately mixing urea and a lignin compound thereby providing a blend, and heating the blend. By blending and heating, either successively or simultaneously, a slow-release fertilizer is obtained having a controlled slow-release, with a relatively simple process. The weight ratio of urea and the lignin compound may be varied, depending on the desired application and desired slow-release properties. For example, the weight ratio may be between about 2:1 and 15:1. In one embodiment, the weight ratio is between about 4:1 and 8:1. In another embodiment, the invention is directed to a process, the process comprising intimately mixing urea and a lignin compound thereby providing a blend, and crushing, heating and moisturing the blend.

This heating of the blend may e.g. be carried out by raising the temperature after or during blending, either in the same reactor or in a subsequent reactor. In one embodiment of the invention, the heating of the blend is performed by pelletising the blend and optionally heating this blend. By pelletising the pressure, and thus the temperature, rises. In a further embodiment, the invention comprises a process wherein pelletising is performed at pressures between 90 and 120 bar. During this pelletising, the blend can optionally be heated. Good results are obtained when the pressure is about 100-110 bar or when the temperature is above about 100°C, e.g. about 110-120°C or above.

In another embodiment, the blend obtained is granulated in a granulation process. This can be carried out after the heating of the blend. Heating, e.g. during a granulation process, can be performed by leading steam through the blend, e.g. steam with a temperature above about 100°C. After using steam to heat the blend, the product that is obtained may be dried in order to get the desired dry matter content. In this way, a slow-release fertilizer is obtainable, that has release properties between about a few weeks to a few months.

In an embodiment, the invention is related to the above-mentioned process, further comprising admixing mineral fertilizer material in the blend, or further comprising admixing organic fertilizer material in the blend. One of the advantages of this process over processes of the state of the art is that it is relatively simple.

In another embodiment, both mineral fertilizer material and organic fertilizer material are admixed. Hence, the invention is also directed to a process for the production of an organomineral fertilizer, the process comprising intimately mixing mineral fertilizer material, urea, a lignin compound and organic fertilizer material thereby providing a blend, and heating the blend. This process has advantages over state of the art processes for producing slow-release fertilizers, since it is relatively simple, e.g. with respect to the process described in US 4789391. Furthermore, the process of the invention leads to a product with a controlled release over a prolonged period, e.g. weeks or even months. This has the advantage that farmers need less fertilising runs on their fields. The slow-release fertilizers of US 4789391, may still display a too fast release in the beginning. Slow-release fertilizers based on organic fertilizer usually have a large deficiency in release in the period direct after applying to a field, and next to that, are unpredictable in their release. However, the organomineral fertilizer of the invention, which is obtainable by the process of the invention, has improved (slow-)release properties but also direct release of nutrients. The organomineral fertilizer of the invention is therefore called a long-release fertilizer, with slow and fast release properties.

Without being bound to any theory, it seems that a quick release is obtained, mainly of the mineral fertilizer material, lasting for e.g. a few days (first nutrient release), a midterm slow-release is obtained, lasting between about a few weeks to a few months in which probably urea is released that may have an interaction with or may be bound to the lignin compound (second nutrient release), and a longer term slow-release is obtained, lasting about a few months to about 5 months, in which organic nitrogen may be released that originates from the organic fertilizer material (third nutrient release). The release times depend on the product texture, size and composition, but also depend on the pH of the soil, the soil moisture, the soil temperature and the presence of micro-organisms, etc. Due to this unique combination of fast and slow-releases of nutrients in a product comprising mineral fertilizer material and organic fertilizer material, this product is called organomineral fertilizer or long-release organomineral fertilizer.

The 'mineral fertilizer material' relates to material comprising mineral salts as fertilizer material, as known in the art. For example, such mineral fertilizer material may comprises one or more of diammonium phosphate (DAP), monoammonium phosphate (MAP), phosphate rock, potassium chloride (MOP), potassium sulphate (SOP), single superphosphate (SSP), triplesuperphosphate (TSP), ammonium sulphate (AS), ammonium chloride, ironsulphate and magnesiumsulphate (kieserite). Also urea is considered as mineral fertilizer. Urea in this invention on the one hand takes part in the first nutrient release step, wherein the mineral fertilizer material is released and in which urea that is not bound to a lignin compound, or loosely bound, is released, and on the other hand, may take part in the second release step, in which the urea that may be bound to the lignin compound is released. In this way, urea is a mineral fertilizer and provides mineral nitrogen, but urea can also provide organomineral nitrogen in the second nutrient release step.

With 'organic fertilizer material' is meant material comprising manure, vegetable residues of litter, green waste, mushrooms, peanut hulls, coconut hulls, cacao-hulls, and grass, etc. Preferably, the manure comprises one ore more of poultry manure, chicken manure, cattle manure and pig manure. Combinations can also be used. In one embodiment, the organic fertilizer material is pre-treated. For example, this pre-treatment comprises drying the organic fertilizer material. In a further embodiment, the pre-treatment comprises drying the organic fertilizer material to a dry matter content of at least 80 wt.%, e.g 85 wt.%, heating the organic fertilizer material to a temperature of at least 75°C and pelletising the organic fertilizer material, e.g. during 1 hour. For the process of the invention, it might be necessary that during or before blending the starting materials, the starting materials are crushed, e.g. especially those starting materials that have large particle sizes (larger than about 2 mm) and which may be pelletised.

A 'lignin compound' is lignin or a derivative thereof. Lignin compounds are found in cell walls as a cement layer between cellulose strands. They are copolymers, i.e. macromolecules of which the monomers are of a different nature. Three phenylpropane (C₆-C₃) derivates are considered as being monomers of lignin: e.g. coneferyl alcohol, sinapyl alcohol and coumaryl or p-hydroxy cinnamyl alcohol. They are coupled together via C-C bonds of the propane chains and via ether bonds between alcoholic groups. In an embodiment, the lignin compound used in the invention comprises one or more of lignin and lignosulfonate. Lignins can be obtained from wood, like e.g. softwood (conifers) or hardwood. The molecular weight varies between about 5,000 and 10,000. In one embodiment, ammoniumlignosulfonate is used as lignin compound.

With the phrase 'urea bound to the lignin compound' is meant that it appears that urea in combination with the lignin compound provides a delayed release of nitrogen (second nutrient release) for the fertilizer or organomineral fertilizer of the invention. This means that there is probably an interaction of urea with the lignin compound, or possibly urea has reacted with the lignin compound or is physically bound to the lignin compound. The term 'bound to the lignin compound' is meant to comprise all these cases. It appears that when urea is brought into the blend, it is substantially not found as water-soluble urea afterwards, as it is the case with conventional mineral fertilizers. When e.g. 10 wt.% N (of a total N content of 14 wt.% in the fertilizer) in the organomineral fertilizer is originally urea-nitrogen only, about 1 wt.% is found afterwards as urea-nitrogen (no nitrate is in the product and ammonium-nitrogen compares with the amount urea input). Thus, almost 90% of the urea-N which would have been expected to be in the first and third nitrogen fractions is found in the second fraction. This means that urea has changed from a pure mineral fraction into an organonitrogen fraction that is water-soluble.

The nitrogen fractions in the organomineral fertilizer of the invention may be divided in several classes:
- Water-soluble mineral nitrogen (from e.g. urea and ammonium)
- Water-soluble organic nitrogen (organonitrogen, mainly from urea bound to the lignin compound)
- Water-insoluble organic nitrogen (e.g. amide (NH₂)) groups embedded in organic matter of e.g. chicken manure).

The manure, e.g. chicken manure, brings about 1 wt.% organic nitrogen into the fertilizer product, which is released in the third nitrogen fraction (insoluble organic nitrogen). Because (chicken) manure contains also some ureic acid that is a water-soluble organic nitrogen, this compound is found in the second fraction (usually about 1 wt.% of fertilizer weight).

The organomineral fertilizer according to the invention, may comprise about 15 to 70 wt.% water-soluble mineral nitrogen (from e.g. urea and ammonium), 25 to 75 wt.% of water-soluble organic nitrogen (organonitrogen, mainly from urea bound to the lignin compound), and 5 to 25 wt.% of water-insoluble organic nitrogen (organic nitrogen (e.g. amide (NH₂)) groups embedded in organic matter of manure) of the total-N content (wt.%) of the organomineral fertilizer. The ranges vary on the desired N(P)K-formula that is prepared and the amount of lignin compound, e.g. lignosulfonate, used. NPK-formulas with a high N content (up to 20 wt.% N on fertilizer weight) and a low to medium P and/or K-content may comprise the highest amount of organonitrogen (up to 75 wt.% of total-N). Formulas with a high content of P and/or K and a low content of N (up to 8 wt.% N on fertilizer weight), may comprise the lowest amount of organonitrogen compounds, as little as about 25 wt.% of total-N).

In one embodiment, the organomineral fertilizer comprises 20-80 wt.% mineral fertilizer material, 2-40 wt.% urea, 20-80 wt.% organic fertilizer material and 0.5-5 wt.% of a lignin compound based on the total weight of the organomineral fertilizer. In a further embodiment, the organomineral fertilizer comprises 30-70 wt.% mineral fertilizer material, 5-30 wt.% urea, 30-70 wt.% organic fertilizer material and 0.7-4 wt.% of a lignin compound based on the total weight of the organomineral fertilizer.

In another embodiment, the organomineral fertilizer comprises 40-70 wt.% mineral fertilizer material, including 5-30 wt.% urea, 30-60 wt.% organic fertilizer material and 1-3 wt.% of a lignin compound based on the total weight of the organomineral fertilizer. The mineral fertilizer material, including urea, comprises in a further embodiment about 0-22 wt.% MAP, 0-22 wt.% DAP, 0-12 wt.% kieserite (MgSO₄), 0-40 wt.% SOP, 5-30 wt.% urea and 0-6 wt.% iron sulphate, based on the total weight of the organomineral fertilizer. The wt.% of urea in these embodiments of the invention are related to urea that is added as starting material. Ureic acid that may be present in manure is not included in this weight percentage.

The organomineral fertilizer of the invention is obtainable with the process of the invention comprising: intimately mixing mineral fertilizer material, urea, a lignin compound and organic fertilizer material thereby providing a blend, and heating the blend. For example, in one embodiment the process comprises a) blending mineral fertilizer material, urea, and organic fertilizer material; b) blending a lignin compound with the fertilizer blend obtained at a); c) warming and moistening the blend obtained at c); d) heating the blend obtained at c). The process of the invention may be a batch process or a continuous process.

The blending of the mineral fertilizer material, urea, and organic fertilizer material and the blending of the lignin compound with the fertilizer blend obtained at a) may also be combined in one process. The blending of the starting materials can done in a blender, e.g. a rotary blend system or a volumetric blend system. When starting materials comprise larger particles, the blending process can also comprise crushing or crumbling, during the blending or before the blending, in which the particles are e.g. reduced in size to approximately 3 mm or smaller, e.g. a particle size of 1-3 mm for 90 wt.% of the starting material. However, also smaller particle size can be used, e.g. 0.5-2 mm, or even smaller, e.g. 90 wt.% of the starting material having a particle size smaller than 1 mm (for example 0.5-1 mm).

As mentioned above, the organic fertilizer material that is used as starting material may be pre-treated, e.g. a pre-treatment comprising drying the organic fertilizer material. The pre-treatment may also comprise a pelletising process. In an embodiment, the pre-treated organic fertilizer comprises one or more of dried (or conditioned) poultry manure, chicken manure, cattle manure and pig manure. In a further embodiment, dried (dry matter content is 70 wt.% or more, e.g. 80-90 wt.%) conditioned (heated) pelletised manure, e.g. chicken manure is used. This can e.g. be obtained by pelletising and heating this manure, reaching temperatures above about 70°C, e.g. 80 to 90°C, and pressures above about 60 bar, e.g. about 90 or 100 bar. When the manure is pre-treated in this way, loss of nitrogen due to ammonia volatilisation, which is environmentally unfriendly, appears to be minimised. In an embodiment, the manure (as starting material) has a dry matter content of 70 wt.% or more, e.g. 80-90 wt.%) or higher (dried), a nitrogen content of about 2 to 5 wt.% on fresh weight base (not dried) and a C/N-ratio (carbon/nitrogen ratio) between 6 and 14.

In case the organic fertilizer starting materials also comprise one or more of vegetable residues of litter, green waste, mushrooms, peanut hulls, coconut hulls, cacao-hulls, and grass, the dry matter content of the organic materials is preferably 70 wt.% or higher (dried), the nitrogen content is about 1 to 3 wt.% on fresh weight base, the C/N-ratio is between about 8 and 16. In case seeds are present, the seeds are preferably inactivated, e.g. by (an extra) thermal process or acid treatment.

The organomineral fertilizer of the invention may further comprise one or more of pesticides, herbicides, fungicides, biostimulants (like vitamines, organic acids, etc.) and micro-organisms (like pseudomona's, bacillus, etc.).

The lignin compound may in one embodiment be added with the other starting materials (mineral fertilizer material, urea, organic fertilizer material), but the lignin compound may in another embodiment also be added together with the urea compound after the other starting materials (mineral fertilizer material, organic fertilizer material) are blended, followed by intimiately mixing with the blend. The particle size of the lignin compound is preferably small, e.g. a powder with a particle size below about 0.02 mm.

The pH of the blend during the blending, but also during the rest of the process, is in one embodiment adjusted and maintained between about 7, e.g. 6-8, or 6.5-7. The risk of ammonia volatilisation is much smaller in a neutral to acidic environment than in an alkaline environment, and hence, in an embodiment the pH is maintained between 6.5-7. The pH of these blends can be measured by pH-H₂O (pH is measured of a filtered sample) For example, ammoniumlignosulfonate, described above as possible lignin compound, has a pH of 5,5 - 6,5 and acts slightly acidic.

After blending the starting materials, the process in one embodiment continues with c) warming and moistening of the blend obtained (at b)). The moistening can be done in several ways, like adding water, either as liquid or as gas. In one embodiment, the warming and moistening is carried out by a process wherein the warming and moistening at c) of the blend obtained at b) comprises leading steam into the blend, such that e.g. 0.5 to 5 wt.% water is added to the blend (based on the total weight of the blend). The reactor, in which the warming and moistening takes place, can also be heated. In a further embodiment, the blend reaches a temperature of about 30-40°C. During warming and moistening, the blend may further be blended. Due to the warming and moistening, the lignin compound, e.g. (ammonium)lignosulfonate, becomes fluid, thereby improving the interaction between the lignin compound and urea. For other lignin compounds than lignosulfonate, other heating temperatures can be chosen, such that the lignin compound starts to become fluid.

The warming at c) is mainly performed to liquidize the lignin compound. In this way, the interaction between the lignin compound and urea is improved. Further, the blending is facilitated. Hence, in one embodiment, the lignin compound that is admixed during the blending or which is used as starting material in the process of the invention is liquid. In a specific embodiment, the process of the invention comprises: blending mineral fertilizer material, urea, and organic fertilizer material; followed by blending a liquid lignin compound with the obtained fertilizer blend; and a subsequent heating of the obtained blend. In the process of the invention, there may be chosen between a lignin compound that is a powder or a liquid.

However, although a liquid lignin compound is used, the process may nevertheless further optionally comprise warming and/or moistening of the blend, depending on the temperature, viscosity and dry matter content of the starting materials (especially of the organic fertilizer material). Hence, in a further embodment, the process of the invention comprises a) blending mineral fertilizer material, urea, and organic fertilizer material; b) blending a liquid lignin compound with the fertilizer blend obtained at a); c) warming and/or moistening the blend obtained at b); d) heating the blend obtained at c). Moistening can be carried out by leading steam into the blend or adding water to the blend. When the dry matter content of the organic fertilizer is relatively low 40-60 wt.%, moistening may not be necessary. As mentioned above, in an embodiment, the organic fertilizer material (e.g. manure as starting material) has a dry matter content of 70 wt.% or more, e.g. 80-90 wt.%) or higher (dried). In this embodiment, moistening may be used to increase the interaction and improve blending.

After blending the starting materials, and optionally warming and/or moistening the blend, the process proceeds by heating the blend. This can e.g. be carried out by raising the temperature after or during the previous stage (c), either in the same reactor or in a subsequent reactor. As mentioned above, the warming and moistening are optional. Hence, the heating (at d) may also be performed after blending, e.g. when a liquid lignin compound is used during blending the starting materials.

In one embodiment of the invention, the heating of the blend is performed by pelletising the blend obtained at c) and optionally heating this blend. By pelletising the pressure, and thus the temperature, rises. In a further embodiment, the invention comprises a process (d) wherein pelletising is performed at pressures between 90 and 120 bar. During this pelletising, the blend can optionally be heated. Good results are obtained when the pressure is about 100-110 bar and/or when the temperature is above about 100°C, e.g. about 110-120°C.

In another embodiment, the blend obtained (at (c)) is granulated in a granulation process. This can be carried out after the heating of the blend. If desired, an extra crushing step, after the heating and before the granulation, can be included in the process, e.g. in a steam granulation or binder granulation.

The granules that are obtained after a granulation process or the product obtained after a pelletisation and/or heating process will usually be further cooled down and processed in order to get the desired particle size and distribution, which may depend on the application and application conditions. Hence, the process as described above, may further comprise crushing and sieving the product obtained after heating, such that e.g. pellets or particles are obtained with a particle size (average or main size) of about 1-6 mm. The person skilled in the art can also choose other sizes or smaller size distributions. Further, the process may be continued by coating the sieved particles obtained after sieving, which have the desired particle size and particle size distribution. This coating may e.g. be done in order to prevent and/or minimise dusting.

The fertilizer of the invention, obtainable by the process of the invention, can be used for treating soils for growing, grass lanes, golf courses, sport fields, parks, arable crops and horticulture crops, professional and private use, etc.

The application rate will depend on the nutrient demands of e.g. the crop and the duration of the crop staying on the field. One has to choose an N(P)K-formula of the organomineral fertilizer that matches the nutrient demand of the crop the best. The nutrient demand is covered by regular nutrient recommendations according to the aims of Good Agricultural Practice (GAP). For short crops (crops that stay on the field for less than 2 months) the total N application rate can be reduced by 10 to 20% due to a higher N-efficiency of the organomineral fertilizer of the invention fertilizer.

Depending on crop type and fertilizer N(P)K-formula one may use about 750 to 2000 kg/ha of this organomineral fertilizer, but other amounts can also be used, since the nutrient release, but also the nutrient demand, depend on temperature, moisture (rainfall), sunlight, pH of the soil, etc.

The composition of the organomineral fertilizer of the invention can be adjusted to fit to the desired parameters. For example, crops can be fed which stay on the field for only 2 months but also crops which stay on the field for 5 months e.g.: a crop like spinach (stays 6 to 8 week on the field) needs all the nutrients in a short period (the nitrogen demand for spinach is about 100-140 kg/ha), whereas onions stay on the field for 5 months and have almost the same nutrient demand as spinach over a much longer period of time. In both cases the crops can be provided with enough nutrients. This is a large difference with the mineral slow-release fertilizers known from the art. Such mineral slow-release fertilizers usually have a relatively strong and quick release in the beginning. This is disadvantageous, since plants may be in the beginning of their growth curve, and thus cannot accept such large amounts of fertilizer. In contrast, the organomineral fertilizer of the invention may have a lower release in the beginning, and a more constant release (long-release fertilizer). Another advantage of the organomineral fertilizer of the invention is that tailor made fertilizers can be provided. It is the crop, the soil and the climate that in general rule the nutrient availability from the organomineral fertilizer. During the process of the invention, the weight percentages of the starting materials may be chosen such that the organomineral fertilizer that is obtained meets the requirements of the specific application.

### Examples

### Example 1: process for the production of a pelletised product

In this example, an embodiment of a process for the production of a pelletised organomineral fertilizer product is described.
1. The production starts with crumbling the mineral fertilizer blend or starts with a crystalline blend. The blend contains mineral fertilizers (N(P)-fertilizers, P-fertilizers, (P)K-fertilizers, (K)Mg-fertilizers and trace-fertilizers) with the usual particle size (mostly 90% 2-5 mm). If and how much of the named mineral fertilizers are used, depends on the N(P)K-formula which has to be made. After crumbling the particle size of fertilizers is 90% 1 mm or e.g. 0.5-1 mm. (In the production of other organomineral fertilizers products like vinasses, bonemeal, fishmeal, etc. can be included for enriching the organic soil improver with minerals. In some cases, some potassium as MOP or SOP and urea is also used.)
2. During the crumbling of mineral fertilizers also the dried (conditioned) chicken manure pellets are crumbled to particles of less than 1 mm or e.g. 0.5-1 mm. These are added to the crumbled mineral fertilizers in a computerised bulk blend installation. The conditioned dried chicken manure is free of animal diseases and free of germinating seeds due to the production process used for the pelletised chicken manure. It is also substantially free of active urease. In the state of the art production of other organomineral fertilizers raw material is mixed with minerals or other organic fertilizers directly, having a dry matter content of 40 to 60 wt.%. Then urease is still active and urea changes into ammonia rather quickly. One can easily smell the ammonia from volatilisation, which is environmentally undesired. During 1 or 2 urea is added to the blend.
3. At the end of the blend station ammoniumlignosulfonate is added at a content of 0.5 to 5 wt.% of the total weight of the blend. The ammoniumlignosulfate is a very fine powder. In some formulas also some trace elements are added together with the ammoniumlignosulfate. The pH of the complete blend is 6.6 to 7.0 and stays constant during the whole process. The blend unit is a continuous computerised controlled process.
4. The complete blend is transported in small batches through the factory. The small batches are made homogeneous by a mixing screw. During this mixing 1 to 3 wt.% steam is brought into the blend for warming and moistening the blend. The dry matter content drops to 85-86 wt.%. Also the surface of the mixing unit is heated up outside. The temperature increases and reaches 30°C to 40°C. Now the lignosulfonate becomes fluid. This process may take a few minutes, depending on the batch size and other process parameters. The white urea crystals now turn into brown coloured small crystals. Lignosulfonate sticks on the urea.
5. The blend stays for 5 to 10 minutes in a holding hopper before pelletising takes place. The temperature during this part of the process is about 35 to 45°C.
6. Pelletising takes place with a pellet press in which a pressure is reached of 90 to 120 bar. The pellets are ± 0.6 cm long and have a diameter of e.g. about 4 mm or 8 mm.
7. The pellets go from the press directly into a cooler. Then the pellets have a temperature of 65 to 75°C. During the stay in the cooler the temperature of the pellets drop to 20-25°C. In total the pellets stay for 3/4 to 1 hour in the cooler. During this time the dry matter content of the pellets increases to 91-93 wt.% and the pellets harden.
8. In the next step the pellets are crushed and transported further. During the transport sharp angles on the granules are reduced. This is done to get a smaller size granule.
9. A triple deck sieve separates the granules. The oversize sieve is 2, 4 or 6 mm and the product screen is 1 or 2 mm. The granular fractions get (depending on the sieves used) are 1-2 mm, 2-4 or mm 2-6 mm. The particle sizes are respectively 1-2 mm (90-95%), 2-4 mm (85-90%) and 2-6 mm (85%-90%). The oversized granules are led to the crusher again. The undersized granules are re-entered into the pelletising process.
10. Than, the granules are coated with a vegetable oil to make the granules dust free.
11. After coating the product is bagged via a modem automatic bagging machine.
12. The whole process from storage of the conditioned pelletised chicken manure until the storage of the long-release organomineral fertilizer is a completely closed process and is computerised.

The granules look like agglomerates wherein the potassium (K-fertilizer) and also some ammoniumphosphate particles (NP-fertilizer) are seen as beige particles in a gray matrix. This matrix is the organic matter from the chicken manure. In the granules, urea is usually not visible by the eye.

### Example 2: Composition of an organomineral fertilizer of the invention

In table 1, an embodiment of a composition is described of an organomineral fertilizer of the invention. In the first column, the material (e.g. added as starting material) is described. When more than one type of such material can be used, examples of types of these materials are mentioned in the second column. In the third column, the range in which the materials and the possible types can be present, are described. Finally, in the last column an example is given of an organomineral composition according to the invention.

**Table 1: Composition of an organomineral fertilizer of the invention**

| MATERIAL | TYPE | RANGE (WT.%) | EXAMPLE* (WT.%) |
|---|---|---|---|
| Mineral fertilizer material | | 20-80 | |
| | DAP | 0-12 | 7.7 |
| | MAP | 0-22 | 0 |
| | phosphate rock | 0-30 | 0 |
| | MOP | 0-20 | 0 |
| | SOP | 0-40 | 13.6 |
| | TSP | 0-20 | 0 |
| | AS | 0-10 | 0 |
| | Kieserite | 0-12 | 6.0 |
| | iron sulphate | 0-6 | 1.5 |
| Urea | | 2-40 | 22.7 |
| Organic fertilizer material | | 20-80 | |
| | poultry manure | 0-80 | 0 |
| | chicken manure | 0-80 | 46.5 |
| | cattle manure | 0-80 | 0 |
| | pig manure | 0-80 | 0 |
| Lignin compound | | 0.5-5 | |
| | ammonium lignosulphonate | 0-5 | 2.0 |

| | | | |
|---|---|---|---|
| (* The organomineral fertilizer in the example has the following formula: NPK 14-5-8 + 2MgO + 0.5Fe. According to international nomenclature, 14-5-8 herein reflects the ratio of N, P and K, respectively, and 2 MgO the amount of magnesium present in the blend, calculated as oxide. The iron sulfate leads to an amount of 0.5 Fe in the blend.) | | | |

### Example 3: Nitrogen release pattern laboratory experiment

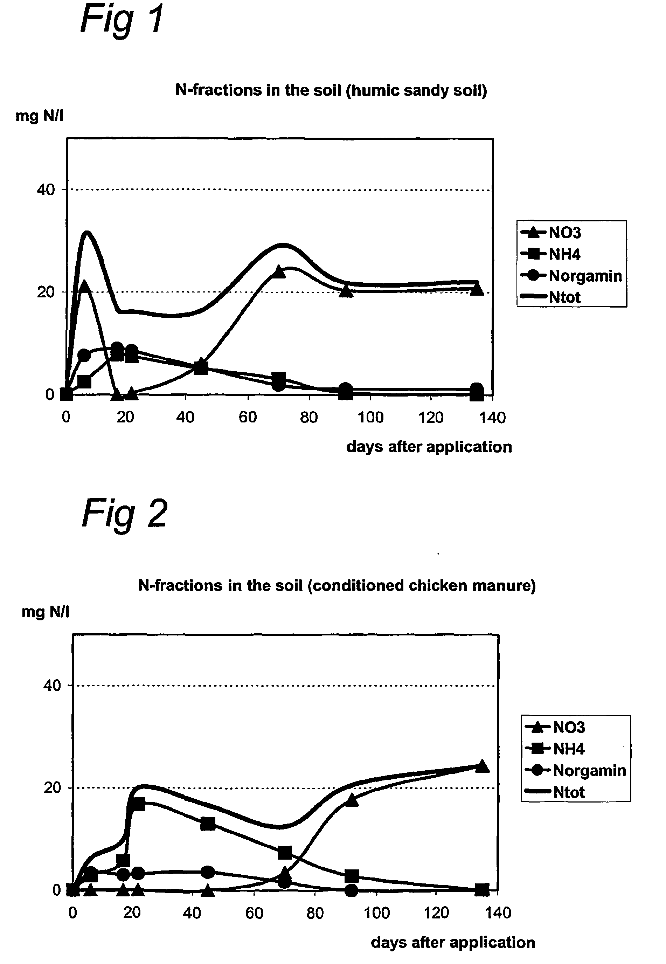

This example demonstrates the nitrogen release patern of an organomineral fertilizer comparable to the organomineral fertilizer of example 2 compared to an organic soil improver (conditioned dried pelletised chicken manure) a standard mineral fertilizer (NPK standard) and a coated slow-release mineral fertilizer (NPK slow-release, coated; 5-6 months duration). The results of this experiment are shown in Figures 1-5. The Department of Soil Science and Plant Nutrition of Wageningen University in the Netherlands (Wageningen Universiteit, faculteit Omgevingswetenschappen, Sectie Bodemkunde en Plantenvoeding) performed these experiments.

The total duration of the test was 72 days. In this period, at different points in time various amounts of water were flushed through the soil at certain moments. The amount of water equals the mean amount of rainfall during the growing season (April to July) in the Netherlands. This water is analysed and gave a rough indication of the amount of nitrogen released from the soil itself and from the fertilizers/soil improvers used in a certain time period of where nitrogen is being measured.

The experiment is performed in plastic pots. The height of the pots is 25 cm and the pots have diameters of 24 cm. In the bottom of the pots 4 holes are present, which are covered by a small plate of glass. These pots are placed in a plastic bucket to collect the flush of water. In case there is flushed with a lot of water, an empty pot is placed under the bucket (14 cm high) such that enough room is created for the flushed water.

The pots where placed in a climate controlled room in which the temperature was constantly kept at 25°C. The results of the measurements were translated to the field circumstances in the Netherlands during the growing season (April to July).

The soil is a humic sandy soil from the surroundings of Wageningen. The organic matter content is about 2.6 wt.% and the pH is 6.5. The mineral nitrogen content is very low. The maximum water holding capacity of this soil is 230 ml per kg soil. With filling the pots, the soil is being made moist until field capacity (60% of maximum water holding capacity).

The pots are divided and filled in 2 parts. The total soil weight is 10 kg of dry soil. 5 kg of dry soil is weighed and 5* (60% of 230) = 690 ml demineralized water is added. The whole is mixed thoroughly and put in a pot according to the normal filling procedure. With this first layer, the pot is being filled for 10 cm. Then, another 5 kg of soil is weighed, water added and previously times gram of the fertilizer or soil improver. Everything is well mixed and the pot is filled. The total soil layer, which is in the pot, is 20 cm with in the top 10 cm the fertilizer of soil improver. Another 5 cm remains over the soil. This space is needed to serve water. The soil is covered with filtering paper so that with rewetting the soil with water during the experiment, the upper soil is not disturbed. After filling, 3 numbers are put on the bucket on top of each other. The first number represents the pot number and furthermore, the treatment. The second number is the total weight of the bucket plus the pot under the pot with soil in the bucket and the pot with soil. This weight relates to a moisture content of the soil of 60% of the water holding capacity. The third number is the weight of the bucket alone. After all pots have been filled, they are placed in the climate chamber at 25 °C.

Flushing the pots, taking the samples and the analyses: there has to be sprayed as much water as possible on the pots, such that a reasonable amount (mm) of rainfall could be analysed. Below the given amount of mm precipitation after starting the test is presented (in ml):
Day 2, 20 mm, this is 3.14* 12* 12*2 is 904 ml
Day 4,20 mm, this is 3.14* 12* 12*2 is 904 ml
Day 8, 35 mm, this is 3.14* 12* 12*3.5 is 1582 ml
Day 18, 45 mm, this is 3.14* 12* 12*4.5 is 2034 ml
Day 30, 60 mm this is 3.14 12* 12*6 is 2713 ml
Day 46, 50 mm, this is 3.14* 12* 12*5 is 2260 ml
Day 72, 40 mm, this is 3,14* 12* 12* 4 is 1808 ml

These amounts of water had to be corrected according to standard procedures with demineralized water.

The next day after giving the amount of water the sample was taken. The pots were taken out of the bucket. The bucket with the amount of water was weighed. By subtracting this weight with the weight of the empty bucket, one can determine the amount of flushed water. Then, the liquid in the bucket was homogenised and a sample was taken in a tube. The left over liquid is thrown away. The pots were placed back in the bucket until the next water gift. The concentration of N-NO₃, N-NH₄, Nₜₒₜₐₗ was determined, after centrifuging the sample, with the help of CFA (continuous flow analyzer). The method of analyzing is according to Soil analyses procedures Extraction with 0,01 M CaCl₂ (Soil and Plant Analyses, Part 5A), Houba, V.J.G, Novazamsky I, Temminghoff, E., Syllabus 1997 Landbouwuniversiteit Wageningen (06173011). The amount water-soluble organic nitrogen/organomineral nitrogen (urea and transformed urea) is calculated from the analyzed fractions. The absolute amount of flushed element can be determined by the flushing weight (rounded off by grams).

Between the periods of flushing water, the pots are regularly (once to twice a week) weighed and, if necessary, brought to the weight which is mentioned on the bucket. All pots received the same amount of nitrogen. The surface of the pot is 3.14*12*12/100 = 4.52 dm².

**Table 2: overview of experiments**

| Pot no. | Product | Dosage per ha | Dosage per dm² | Dosage per pot |
|---|---|---|---|---|
| 1 until 3 | control (only soil) | - | - | 0 grams |
| 4 until 6 | organic soil improver (NPK 5-3-2) | 3000 kg | 3 grams | 13.56 grams |
| 7 until 9 | organomineral fertilizer | 1000 kg | 1 grams | 4.52 grams |
| | (NPK 14-5-8) | | | |
| 10 until 12 | Standard mineral fertilizer (standard NPK 12-10-18) | 1125 kg | 1.1 gram | 4.97 grams |
| 13 until 15 | Slow-release mineral fertilizer (NPK 18-5-12, slow-release, coated) | 750 kg | 0.75 gram | 3.39 grams |

The results are shown in Figures 1 to 5. The amount of different nitrogen fractions showed in Figure 2 to 5 is corrected for the amount of the fractions in the control pots.

Figure 1 shows that in the sandy soil mineralization starts directly from the start of the experiment. Nitrification starts after 17 days. The total amount of nitrogen fractions in the soil is rather low. The rather high amount of organomineral N at the start of the experiment is due to the decomposition of organic matter. Then amide-N (NH₂) is released and transformed into ammonium (NH₄).

Figure 2 shows the release pattern of the conditioned chicken manure (ingredient of the organomineral fertilizer of the invention). Mineralization starts after 20 days. Then the nitrogen release stays rather stable. Only a change form ammonium to nitrate takes place.

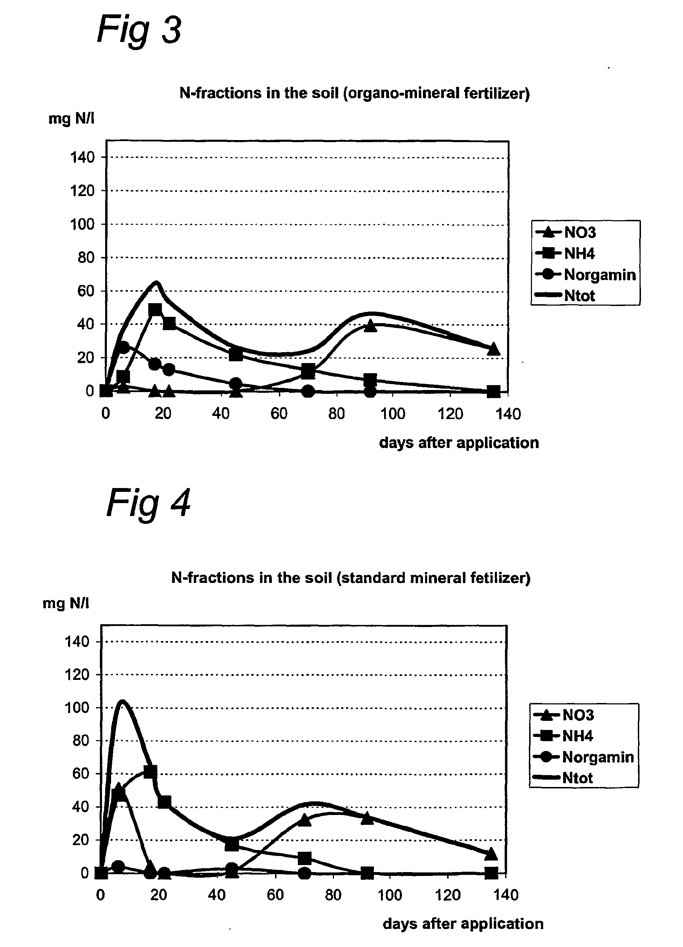

Figure 4 shows the traditional picture of the nitrogen release of a standard mineral NPK fertilizer in which the total nitrogen content consists of 50% nitrate and 50% ammonium. Directly at the start of the experiment a high nitrogen release (all mineral N) is analysed.

The organomineral fertilizer (Figure 3) has no nitrate release at the beginning, only ammonia, urea and organomineral nitrogen. The organonitrogen fraction lasts for about 1 to 2 months.

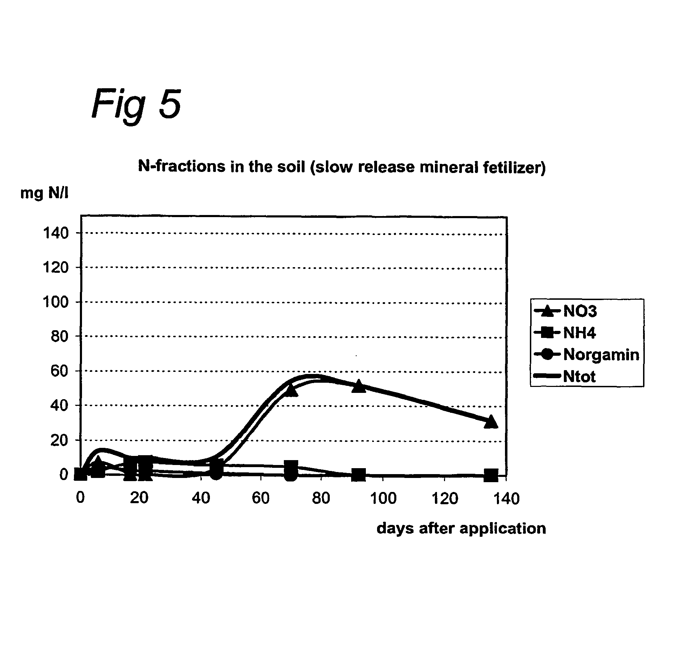

One can see in figure 5 that the nitrogen release of the coated fertilizer is very low in the beginning. For a lot of crops this is too less. The release increased sharply after 45 days. The release pattern correlates roughly with the release pattern known from the manufacturer of this fertilizer. 5 to 6 month duration may only exist under low temperatures (15°C). The dip in the nitrogen release during 40 to 70 days after application is probably due to a high denitrification rate (nitrogen loss by volatilization). During that period the pots were too wet.

### Example 4: Efficiency of the organomineral fertilizer in unions

This example demonstrates the mineral efficiency of an organomineral NPK fertilizer according to the invention compared to the use of standard NPK fertilizers in the cultivation of seed unions. The experiment was done on a trial field in the open air.

The plots on the trial field were randomized and of each plot 4 repetitions were performed, see tables 3-5.

**Table 3: Overview of experiments**

| Object | Treatment | N | P₂O₅ | K₂O |
|---|---|---|---|---|
| A | not treated | - | - | - |
| B | Standard NPK fertilizer | 100 | 142 | 235 |
| C | organomineral fertilizer* | 100 | 90 | 210 |

| | | | | |
|---|---|---|---|---|
| (* NPK formula: NPK 7-6-14 + 2.5 MgO) | | | | |

**Table 4: General trial field data**

| | | | |
|---|---|---|---|
| Crop | seed-onions | | |
| Race | Summit | | |
| Seed date | April 8, 2002 | | |
| Seed distance | 4 units | | |
| Cultivar | seed-potato | | |
| N-min 0-60 cm* | | February 4 | 26 kilo/ha |
| Fertilisation | | Test case | |
| | | June 3 | 0.75 l/ha manganese nitrate** |
| | | June 25 | 0.5 l/ha manganese nitrate** |
| | | July 5 | 0.75 l/ha manganese nitrate** |
| | | July 26 | 1 l/ha manganese nitrate** |
| Weed control | | April 20 | 3 l/ha Reglone + 1 Stomp 400 SC |
| | | May 11 | 0.5 l/ha Pyramin + 0.5 Stomp |
| | | May 18 | 0.55 l/ha Pyramin |
| | | May 23 | 0.55 l/ha Pyramin + 0.55 Stomp + 1 CIPC |
| | | June 1 | 0.5 l/ha Pyramin + 0.2 Basagran |
| | | June 4 | 1 l/ha Targa + 1 Actirob |
| | | June 17 | 0.2 l/ha Actril + 0.3 Basagran |
| Disease control | | July 5 | 2 l/ha Daconil |
| | | July 12 | 1 l/ha Daconil + 0.4 Kenbyo |
| | | July 19 | 0.4 l/ha Shirlan |
| | | July 26 | 11/ha Daconil + 0.4 Kenbyo |
| | | August 2 | 11/ha Daconil + 0.2 Ridomil |
| | | August 8 | 4.51/ha Macozeb + 0.2 Ridomil |
| | | August 15 | 4.5 1/ha Macozeb + 0.2 Ridomil |
| Harvest | | September 13 | |

| | | | |
|---|---|---|---|
| (*N-min is the amount of mineral nitrogen in the soil (o-60 cm) at a certain moment: here it is measured before starting the trial; **All plots received manganese to prevent shortages according to the soil nutrient status.) | | | |

**Table 5: Soil analyses:**

| | |
|---|---|
| pH-KCl | 7.6 |
| CaCO₃ | 7.2 % |
| Organic matter | 1.9 % |
| Clay content | 13 % |
| Pw (water soluble phosphorus content) | 25 mg P₂O₅ / 1 |
| K-HCl | 18 mg K₂O / 100 gr |
| MgO-NaCl | 156 mg MgO / kg dry matter |
| Mn | 88 mg Mn / kg dry matter |

After ploughing on March 7 the soil was prepared with a harrow. Fertilizer application was done on March 27. Object B (Standard) got a start standard NPK fertilization of 660 kg/ha and on May 30 an additional fertilization was given of 330 kg/ha standard NPK. With this 100 kg N was given. On April 8 the onions were sowed. The rise around May 1 was good. The very long wet period has had its impact on the development, because the soil shut down and water appeared. Later in the season an improvement occurred. The position was good and there were about 23.3 plants per row. On June 24 untreated started to color light. On August 27 the organomineral fertilizer objects were for about 60-70% fallen, while that with Standard NPK fertilizer came down to 20 % and untreated was just a few onions. On September 2, the organomineral fertilizer objects were fully fallen and the Standard for over a half and untreated a quarter. On September 6 harvest took place and the unions lay uncovered on the soil to dry. On September 13, 6 meters of the harvest of each plot was put in bags for measurements. On September 24 the unions were sorted. A sample of size 40/60 was put in for possible store differences (the diameter of the unions was about 40-60 mm).

In Table 6 is the color and development on July 17, the percentage unions fallen on August 27 and the total yield and size differentiation are presented out.

**Table 6: Mean color, position and % unions fallen on August 27; mean yield and mean size differentiation in kg/are.**

| Object | Color* | Position* | % fallen<40 | | 40-60 | 60-70 | >70 | Total |
|---|---|---|---|---|---|---|---|---|
| | July 17 | | August 27 | | | | | |
| A untreated | 4 | 5.5 | 5 | 44.1 | 311 | 86 | 12 | 453 |
| B Standard | 6.5 | 7 | 20 | 25.4 | 376 | 177 | 28 | 635 |
| C Invention | 7.5 | 8.5 | 70 | 18.0 | 315 | 292 | 80 | 706 |
| Lsd** | - | - | - | 17.4 | 79 | 53 | 25 | 86 |

| | | | | | | | | |
|---|---|---|---|---|---|---|---|---|
| (* Colours and position are judged according to methods known in the art, and judged on a scale of 1-10, with 10 being best; **Lsd is standard deviation.) | | | | | | | | |

The untreated plots showed a significant lower yield than the objects that have been treated. Object C treated with the organomineral of the invention has significant more proceeds than the standard fertilization (B). The standard fertilization gave a total yield of 635 kg/ha and stayed significant under the organomineral fertilizer yield (about 700 kg/ha). Also the size differentiation was better with organomineral fertilizer than with standard NPK fertilizers. All this was achieved with just one application of the organomineral fertilizer organo-mineral fertilizer against two applications with standard mineral fertilizers. That means that the organomineral fertilizer does not only give a better yield and quality of the unions but also significantly saves time on application.

### Example 5

This example demonstrates the mineral efficiency of the organomineral NPK fertilizer (Organomineral fertilizer) compared to the use of standard NPK fertilizers in the cultivation of spinach. Especially N-efficiency related to the controlling or reducing of nitrate in spinach is watched. This should have happened via special fertilization or crop squirting.

The experiment was done on a trial field in the open air. The trial station Oostwaardhoeve of Innoventis in the Netherlands performed this experiment in 2002. The plots on the trial field were randomized and of each plot 4 repetitions were there.

**Table 7: Overview of experiments**

| Object | Treatment (kg/ha) | N | P₂O₅ | K₂O |
|---|---|---|---|---|
| 1 | not treated | - | - | - |
| 2 | 1000 kg organomineral fertilizer* | 140 | 50 | 80 |
| 3 | 750 kg organomineral fertilizer* | 105 | 38 | 60 |
| 4 | 630 kg + 650 NPK (standard) | 170 | 97 | 195 |
| 5 | 650 kg N-fertilizer with | | | |
| | nitrification inhibitor + | 170 | 97 | 195 |
| | 650 kg stanard NPK | | | |

| | | | | |
|---|---|---|---|---|
| (* the NPK formula of the organomineral fertilizer is: NPK 14-5-8 + 2MgO) | | | | |

**Table 8: General trial field data**

| | |
|---|---|
| Crop | spinach |
| Cultivar | Spinaker |
| Seed date | July 29, 2002 |
| Seed distance | 8-11 milj. Seeds/ha |
| N-min 0-30 cm | February 4 35 kilo/ha |
| Fertilization | July 29 organomineral fertilizer and mineral nitrogen and PK fertilizers |
| Weed control | July 30 51/ha Asulox |
| | August 12 5 1/ha Asulox |
| Harvest | September 3 |

**Table 9: Soil analyses**

| | |
|---|---|
| pH-KCl | 7.2 |
| Organic matter | 6.6 % |
| Clay content | 21 % |
| Pw (water soluble phosphorus content) | 35 mg P₂O₅/l |
| K-HCl | 20 mg K₂O/100 gr |

In this experiment the plots were gross 3 meter x 6.5 meter and netto 3 meter x 6 meter. With a sprayer (Teejet 11002xr) the weed control is done. The water amount that used is 300 1 water per ha. Spraying is performed with a pressure of 2.5 bar. Due to a large amount of precipitation after rise of the spinach, the crops stood very irregular and it was almost impossible to execute a judgement involving the development and yield of the crop. The amount of leaves per plant was per plot were counted as and indication for the total yield. The total yield was calculated on the base of leaves per plant per plot and the normal yield of spinach of this

Cultivar during this growing period: on August 15 and after harvest, soil samples were taken to determine the present total stock of N. After harvest also samples of the leaves per plot were analyzed on the nitrate the content.

**Table 10: results of the soil samples during the cultivation (August 18th)**

| Object | Results N samples | |
|---|---|---|
| 1 | 94.4 | d** |
| 2 | 171.6 | b** |
| 3 | 137.2 | c** |
| 4 | 157.3 | bc** |
| 5 | 220.9 | a** |
| F-value* | | 0.01 |
| 5 % LSD | | 33.9 |

| | | |
|---|---|---|
| (*F-value according to Fisher statistical test; **In case two objects are compared having the same letter, this means that the differences are not significant. In case the differences are significant, the differences in allowed standard deviation (or defined confidence interval) are significant. In table 10: the differences between the objects 2 -5 compared to object 1 are significant, whereas the differences between object 2 and 4 and the difference between object 3 and 4 is not significant.) | | |

From Table 10 the high mineral N content (NO₃ + NH₄) in object 1 (untreated) is striking. This is probably caused by the mineralization of green parts of the vegetation (salad), which was there before this experiment was executed. After harvesting, a few more samples were taken to analyze the amount of N in the soil.

**Table 11: Result of soil sample after harvesting (September 3)**

| Object | Results N sample | |
|---|---|---|
| 1 | 48.5 | b |
| 2 | 75.5 | a |
| 3 | 63.3 | a |
| 4 | 68.8 | a |
| 5 | 80.3 | a |
| F-value | | 0.05 |
| 5 % LSD | | 15.3 |

During harvesting, a few samples of spinach were taken, which were sent for analyses to determine the amount of nitrate in the leaves.

**Table 12: Amount of nitrate in the spinach**

| Object | Results amount of nitrate | |
|---|---|---|
| 1 | 473 | b |
| 2 | 523 | b |
| 3 | 371 | b |
| 4 | 484 | b |
| 5 | 923 | a |
| F-value | | 0.06 |
| 5 % LSD | | 201 |

**Table 13: Average counted amount of leaves and calculated yield**

| Object | Number of leaves | Yield (Mt/ha)* |
|---|---|---|
| 1 | 6 | 21.4 |
| 2 | 11 | 39.3 |
| 3 | 10 | 35.7 |
| 4 | 9 | 32.1 |
| 5 | 7 | 25.0 |

| | | |
|---|---|---|
| (* The yield is calculated and extrapolated, based on the difference in counted leaves and an average yield of 25 Mt/ha in common practice.) | | |

Despite the bad circumstances and the damage caused by the heavy rainfall, the conclusion still can be made that a dosage of 1000 and 750 kg/ha of the organomineral fertilizer according to the invention having the composition as given in example 2 (except for Fe is 0.5) is sufficient for the cultivation of Spinach. With this dosage, the amount of nitrate in the spinach was the very low. It is notably that with the application of 750 kg the organomineral fertilizer/ha the nitrate content in the spinach is even lower than untreated. It is also striking that during counting the leaves of the spinach plant the leaves in the the organomineral fertilizer objects were larger than in the other objects. In general the organomineral fertilizer performed good and turned out to be a very nutrient efficient fertilizer that is competitive to nitrogen fertilizers with nitrification inhibitor.

## Claims

1. Process for the production of an organomineral fertilizer, the process comprising intimately mixing mineral fertilizer material, urea, a lignin compound and organic fertilizer material thereby providing a blend, and heating the blend, wherein the organic fertilizer material comprises manure.

2. Process according to claim 1, wherein the organomineral fertilizer comprises 20-80 wt.% mineral fertilizer material, 2-40 wt.% urea, 20-80 wt.% organic fertilizer material and 0.5-5 wt.% of a lignin compound based on the total weight of the organomineral fertilizer.

3. Process according to one of claims 1 or 2, wherein the mineral fertilizer material comprises one or more of diammonium phosphate (DAP), monoammonium phosphate (MAP), phosphate rock, potassium chloride (MOP), potassium sulphate (SOP), single superphosphate (SSP), triplesuperphosphate (TSP), ammonium sulphate (AS), ammonium chloride, ironsulphate and magnesiumsulphate.

4. Process according to one of claims 1-3, wherein the organic fertilizer material comprises one or more of poultry manure, chicken manure, cattle manure, pig manure and optionally one or more of vegetable residues of litter, green waste, mushrooms, peanut hulls, coconut hulls, cacao-hulls, and grass.

5. Process according to one of claims 1-4, wherein the organic fertilizer material is pre-treated, and wherein the pre-treatment comprises drying the organic fertilizer material.

6. Process according to one of claims 1-5, wherein the lignin compound is a powder or a liquid.

7. Process according to one of claims 1-6, comprising:
a) blending mineral fertilizer material, urea, and organic fertilizer material;
b) blending a lignin compound with the fertilizer blend obtained at a);
c) warming and moistening the blend obtained at b);
d) heating the blend obtained at c).

8. Process according to claim 7, wherein the warming and moistening at c) of the blend obtained at b) comprises leading steam into the blend.

9. Process according to one of claims 1-8, wherein the heating of the blend is performed by pelletising the blend and optionally heating the blend.

10. Process according to one of claims 9, wherein pelletising is performed at pressures between 90 and 120 bar.

11. Process according to one of claims 1-10, further comprising cooling, crushing and sieving the product obtained after heating, and coating sieved particles obtained after sieving.

12. Process according to one of claims 1-11, wherein the lignin compound comprises one or more of lignin and lignosulfonate.

13. Process according to one of claims 1-12, wherein the pH during blending is maintained between 6 and 7.5.

14. Organomineral fertilizer comprising mineral fertilizer material, urea, organic fertilizer material and a lignin compound obtainable according to one of claims 1-13.

15. Organomineral fertilizer according to claim 14, comprising 20-80 wt.% mineral fertilizer material, 2-40 wt.% urea, 20-80 wt.% organic fertilizer material and 0.5-5 wt.% of a lignin compound based on the total weight of the organomineral fertilizer.

16. Organomineral fertilizer according to claims 14 or 15, comprising 25 to 75 wt.% of water-soluble organic nitrogen, 15 to 70 wt.% water-soluble mineral nitrogen and 5 to 25 wt.% of water-insoluble organic nitrogen of the total-N content of the organomineral fertilizer.

## Patentansprüche

1. Verfahren zur Herstellung eines organomineralischen Düngers, wobei das Verfahren folgendes aufweist:
inniges Vermischen von mineralischem Düngermaterial, Harnstoff, einer Ligninverbindung und organischem Düngermaterial, wodurch ein Gemisch bereitgestellt wird, und
Erwärmen des Gemischs, wobei das organische Düngermaterial Dung umfaßt.

2. Verfahren nach Anspruch 1, wobei der organomineralische Dünger 20 bis 80 Gew.-% mineralisches Düngermaterial, 2 bis 40 Gew.-% Harnstoff, 20 bis 80 Gew.-% organisches Düngermaterial und 0,5 bis 5 Gew.-% einer Ligninverbindung aufweist, und zwar auf das Gesamtgewicht des organomineralischen Düngers bezogen.

3. Verfahren nach einem der Ansprüche 1 oder 2, wobei das mineralische Düngermaterial eine oder mehrere der folgenden Verbindungen aufweist: Diammoniumphosphat (DAP), Monoammoniumphosphat (MAP), Phosphaterz, Kaliumchlorid (MOP), Kaliumsulfat (SOP), Einzel-Superphosphat (SSP), Triple-Superphosphat (TSP), Ammoniumsulfat (AS), Ammoniumchlorid, Eisensulfat und Magnesiumsulfat.

4. Verfahren nach einem der Ansprüche 1 bis 3. wobei das organische Düngermaterial eine oder mehrere Substanzen aus Geflügeldung, Hühnerdung, Rinderdung, Schweinedung und gegebenenfalls eine oder mehrere Substanzen aus pflanzlichen Resten aus Abfällen, Gemüseabfällen, Pilzen, Erdnußschalen, Kokosnußschalen, Kakaoschalen und Gras aufweist.

5. Verfahren nach einem der Ansprüche 1 bis 4, wobei das organische Düngermaterial vorbehandelt wird, und wobei die Vorbehandlung das Trocknen des organischen Düngermaterials umfaßt.

6. Verfahren nach einem der Ansprüche 1 bis 5, wobei die Ligninverbindung ein Pulver oder eine Flüssigkeit ist.

7. Verfahren nach einem der Ansprüche 1 bis 6, das folgendes aufweist:
a) Mischen von mineralischem Düngermaterial, Harnstoff und organischem Düngermaterial;
b) Mischen einer Ligninverbindung mit dem unter a) erhaltenen Düngergemisch;
c) Erwärmen und Befeuchten des unter b) erhaltenen Gemischs;
d) Erwärmen des unter c) erhaltenen Gemischs.

8. Verfahren nach Anspruch 7, wobei das Erwärmen und Befeuchten in c) des unter b) erhaltenen Gemischs das Einführen von Dampf in das Gemisch umfaßt.

9. Verfahren nach einem der Ansprüche 1 bis 8, wobei das Erwärmen des Gemischs erfolgt, indem das Gemisch pelletiert und das Gemisch gegebenenfalls erwärmt wird.

10. Verfahren nach Anspruch 9, wobei das Pelletieren bei einem Druck von 90 bis 120 bar erfolgt.

11. Verfahren nach einem der Ansprüche 1 bis 10, das ferner das Abkühlen, Zerkleinern und Sieben des nach dem Erwärmen erhaltenen Produktes und das Beschichten der nach dem Sieben erhaltenen gesiebten Partikel aufweist.

12. Verfahren nach einem der Ansprüche 1 bis 11, wobei die Ligninverbindung eine oder mehrere Substanzen aus Lignin und Lignosulfonat umfaßt.

13. Verfahren nach einem der Ansprüche 1 bis 12, wobei der pH-Wert beim Vermischen bei 6 bis 7,5 gehalten wird.

14. Organomineralischer Dünger, der ein mineralisches Düngermaterial, Harnstoff, ein organisches Düngermaterial und eine Ligninverbindung aufweist, der nach einem der Ansprüche 1 bis 13 erhalten werden kann.

15. Organomineralischer Dünger nach Anspruch 14, der 20 bis 80 Gew.-% mineralisches Düngermaterial, 2 bis 40 Gew.-% Harnstoff, 20 bis 80 Gew.-% organisches Düngermaterial und 0,5 bis 5 Gew.-% einer Ligninverbindung aufweist, und zwar auf das Gesamtgewicht des organomineralischen Düngers bezogen.

16. Organomineralischer Dünger nach Anspruch 14 oder 15, der 25 bis 75 Gew.-% wasserlöslichen organischen Stickstoff, 15 bis 70 Gew.-% wasserlöslichen mineralischen Stickstoff und 5 bis 25 Gew.-% wasserunlöslichen organischen Stickstoff des gesamten N-Gehalts des organomineralischen Düngers aufweist.

## Revendications

1. Procédé de production d'un engrais organominéral, le procédé impliquant de bien mélanger de l'engrais minéral, de l'urée, un composé de type lignine et de l'engrais organique pour obtenir un mélange, et de chauffer ledit mélange, l'engrais organique comprenant du fumier.

2. Procédé selon la revendication 1, dans lequel l'engrais organominéral comprend de 20 à 80 % en poids d'engrais minéral, de 2 à 40 % en poids d'urée, de 20 à 80 % en poids d'engrais organique et de 0,5 à 5 % en poids d'un composé de type lignine, sur la base du poids total de l'engrais organominéral.

3. Procédé selon l'une des revendications 1 ou 2, dans lequel l'engrais minéral comprend une ou plusieurs des substances suivantes : phosphate diammonique (DAP), phosphate monoammonique (MAP), phosphorite, chlorure de potassium (MOP), sulfate de potassium (SOP), superphosphate simple (SSP), superphosphate triple (TSP), sulfate d'ammonium (AS), chlorure d'ammonium, sulfate de fer et sulfate de magnésium.

4. Procédé selon l'une des revendications 1 à 3, dans lequel l'engrais organique comprend une ou plusieurs des substances suivantes : fumier de volaille, fumier de poulet, fumier de bétail, fumier de porc et, éventuellement, une ou plusieurs des substances suivantes : résidus végétaux de litière, déchets verts, champignons, coques d'arachide, enveloppes de noix de coco, gousses de cacao et herbe.

5. Procédé selon l'une des revendications 1 à 4, dans lequel l'engrais organique est prétraité, ledit prétraitement comprenant le séchage de l'engrais organique.

6. Procédé selon l'une des revendications 1 à 5, dans lequel le composé de type lignine se présente sous la forme d'une poudre ou d'un liquide.

7. Procédé selon l'une des revendications 1 à 6, comprenant :
a) le mélange de l'engrais minéral, de l'urée et de l'engrais organique ;
b) le mélange d'un composé de type lignine avec le mélange fertilisant obtenu lors de l'étape a) ;
c) le chauffage et l'humidification du mélange obtenu lors de l'étape b) ;
d) le chauffage du mélange obtenu lors de l'étape c).

8. Procédé selon la revendication 7, dans lequel le chauffage et l'humidification appliqués lors de l'étape c) au mélange obtenu lors de l'étape b) comprennent l'introduction de vapeur dans le mélange.

9. Procédé selon l'une des revendications 1 à 8, dans lequel le chauffage du mélange est réalisé par granulation du mélange et, éventuellement, par chauffage du mélange.

10. Procédé selon la revendication 9, dans lequel la granulation est réalisée à une pression comprise entre 90 et 120 bar.

11. Procédé selon l'une des revendications 1 à 10, comprenant, en outre, les étapes consistant à refroidir, broyer et tamiser le produit obtenu après chauffage et à enrober les particules tamisées obtenues après tamisage.

12. Procédé selon l'une des revendications 1 à 11, dans lequel le composé de type lignine comprend de la lignine et/ou du lignosulfonate.

13. Procédé selon l'une des revendications 1 à 12, dans lequel le pH est maintenu entre 6 et 7,5 lors du mélange.

14. Engrais organominéral, comprenant de l'engrais minéral, de l'urée, de l'engrais organique et un composé de type lignine, pouvant être obtenu selon l'une des revendications 1 à 13.

15. Engrais organominéral selon la revendication 14, comprenant de 20 à 80 % en poids d'engrais minéral, de 2 à 40 % en poids d'urée, de 20 à 80 % en poids d'engrais organique et de 0,5 à 5 % en poids d'un composé de type lignine, sur la base du poids total de l'engrais organominéral.

16. Engrais organominéral selon les revendications 14 ou 15, comprenant de 25 à 75 % en poids d'azote organique hydrosoluble, de 15 à 70 % en poids d'azote minéral hydrosoluble et de 5 à 25 % en poids d'azote organique non hydrosoluble, sur la base de la teneur totale en azote de l'engrais organominéral.
